(19) Europäisches Patentamt
European Patent Office
Office européen des brevets

(11) Veröffentlichungsnummer: 0 005 221
B1

(12) # EUROPÄISCHE PATENTSCHRIFT

(45) Veröffentlichungstag der Patentschrift: **14.10.81**

(51) Int. Cl.³: **C 08 F 246/00**, C 08 F 220/44

(21) Anmeldenummer: **79101202.4**

(22) Anmeldetag: **20.04.79**

(54) **Verfahren zur Herstellung von Acrylnitrilcopolymerisatdispersionen.**

(30) Priorität: **03.05.78 DE 2819380**

(43) Veröffentlichungstag der Anmeldung: **14.11.79 Patentblatt 79/23**

(45) Bekanntmachung des Hinweises auf die Patenterteilung: **14.10.81 Patentblatt 81/41**

(84) Benannte Vertragsstaaten: **BE DE FR GB IT NL**

(56) Entgegenhaltungen: **US-A-3 595 823**

(73) Patentinhaber: **BAYER AG, Zentralbereich Patente, Marken und Lizenzen, D-5090 Leverkusen 1, Bayerwerk (DE)**

(72) Erfinder: **Lindner, Christian, Dr., Riehler Strasse 200, D-5000 Köln 60 (DE)**
Erfinder: **Ott, Karl-Heinz. Dr., Paul-Klee-Strasse 54, D-5090 Leverkusen (DE)**
Erfinder: **Humme, Gert, Dr., Ackerstrasse 17, D-5068 Odenthal (DE)**

EP 0 005 221 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Herstellung von Acrylnitrilcopolymerisatdispersionen

Die Anmeldung betrifft Polymerdispersionen aus Copolymerisaten des Acrylnitrils mit anderen Vinylmonomeren mit einem niedrigen Restgehalt an monomerem Acrylnitril sowie ein Verfahren zur Herstellung derselben.

Bekanntlich enthalten radikalisch initiierte, wäßrige Polymerdispersionen Anteile nicht umgesetzte Monomerer. Diese Restgehalte müssen meistens vor der Weiterverarbeitung der bei der Emulsionspolymerisation anfallenden Emulsion (Dispersion) dadurch entfernt werden, daß man beispielsweise die Emulsion (Dispersion) einem Entgasungsprozeß unterwirft oder die Restgehalte an Monomeren chemisch zerstört. Wünschenswert ist es, den Restgehalt an Monomeren derart zu verringern, daß z. B. das notwendige Entgasungsverfahren verkürzt werden oder entfallen kann. Eine derartige Verfahrensverbesserung hat den Vorteil, daß sie die Herstellung der Polymeren aus Emulsionen (Dispersionen) vereinfacht und daß eine mögliche Umweltbelastung durch freie Monomere verringert wird.

Aufgabe der vorliegenden Erfindung war es, wäßrige Acrylnitrilcopolymerisatdispersionen herzustellen, deren Restgehalte an monomeren Acrylnitril $\leq$500 ppm, in speziellen Fällen $\leq$100 ppm beträgt.

Die Aufgabe wurde dadurch gelöst, daß Acrylnitril und weitere Vinylmonomere unter den Bedingungen einer Emulsionspolymerisation und unter speziellen Verfahrensbedingungen in Gegenwart ausgewählter anionischer Emulgatoren bis zu praktisch vollständigem Umsatz der Monomeren zu 30–45gew.-%igen wäßrigen Copolymerisatdispersionen mit einem durchschnittlichen Teilchendurchmesser von $\leq$90 nm, ermittelt durch Lichtstreuung, polymerisiert werden.

Die gemäß dem Verfahren der Erfindung einzusetzenden Emulgatoren, d. h. Alkylarylpolyäthylenglykoläther-sulfate bzw. Alkylarylsulfonat-polyalkylenglykoläther-sulfate (Alkali- oder Ammoniumsalze) sind aus den US-PS 2 203 883 bzw. 2 106 716 bekannt, ebenso deren emulgierende Eigenschaften. Ferner ist aus der DE-AS 1 694 161 Spalte 8, Zeile 65 bekannt, Copolymerisate des Acrylnitril-Styrols durch Emulsionspolymerisation unter Einsatz von Alkylarylsulfaten mit 10 bis 20 C-Atomen als Emulgator herzustellen.

Gegenstand der vorliegenden Erfindung ist ein Verfahren zur Herstellung von 30–45gew.-%igen wäßrigen Acrylnitrilcopolymerisatdispersionen mit einen durchschnittlichen, durch Lichtstreuung ermittelten Teilchendurchmesser von $\leq$90 nm und einem Restmonomergehalt an Acrylnitril von $\leq$500 ppm durch Emulsionspolymerisation von 5–50 Gew.-Teilen Acrylnitril und 50–95 Gew.-Teilen mindestens eines weiteren Vinylmonomeren — die Summe der Gew.-Teile ist 100 — bei Temperaturen von 40 bis 85° C in Gegenwart mindestens eines wasserlöslichen Radikalbildners bzw. Redoxsystems, in Gegenwart mindestens eines anionischen Emulgators und gegebenenfalls üblicher Hilfsmittel bis zum praktisch vollständigen Umsatz der Monomeren, dadurch gekennzeichnet, daß — bezogen auf 100 Gew.-Teile Monomere — insgesamt 1 bis 4 Gew.-Teile mindestens eines anionischen Emulgators der Formel (I)

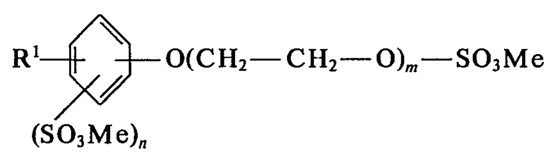

(I)

worin

$R^1$ einen gesättigten verzweigten oder geradkettigen Alkylrest mit 5 bis 12 C-Atomen,
n gleich 0 oder 1 und
m gleich 2 bis 12 und
Me Alkalimetall oder Ammonium bedeuten,

eingesetzt werden, wobei 60–95 Gew.-% der Emulgatormenge und 4–20 Gew.-% der Gesamtmonomeren in der Hauptmenge (=50–90 Gew.-% der Gesamtmenge Wasser) des Wassers vorgelegt werden, die Polymerisation mit einer wäßrigen Lösung des Radikalbildners oder der Redox-Systeme gestartet wird und 5–40 Gew.-% der Emulgatormenge in der Restmenge Wasser und die Restmenge der Monomeren zudosiert werden.

In der Formel (I) bedeutet Me vorzugsweise Na. Ferner werden Verbindungen der Formel (I) mit n = 0 bevorzugt.

Die eingesetzten Monomeren stellen Gemische aus 5 bis 50 Gew.-Teilen, vorzugsweise 20 bis 40 Gew.-Teilen, Acrylnitril und 95 bis 50, vorzugsweise 80 bis 60 Gew.-Teilen mindestens einem mit Acrylnitril copolymerisierbaren Vinylmonomeren dar, beispielsweise Vinylaromaten, vorzugsweise Styrol oder $\alpha$-Methylstyrol sowie (Meth)Acrylsäureester, deren Alkoholkomponenten 1 bis 12 C-Atome besitzen, vorzugsweise Methacrylsäuremethylester und Acrylsäure-n-butylester.

Als Radikalbildner für die Emulsionspolymerisation können die üblichen wasserlöslichen Initiatoren in den üblichen Mengen (0,1 – 5 Gew.-% bezogen auf Monomere) bei Temperaturen von 40° C bis 80° C eingesetzt werden, wie beispielsweise Alkalipersulfate, Ammoniumpersulfat, wasserlösliche Peroxide, Percarbonsäureester, Azoverbindungen sowie ferner die üblichen Redoxsysteme, wie beispielsweise Mischungen aus Persulfaten : Pyrosulfiten oder Persulfaten/Oxalsäure. Vorzugsweise werden die Radikalbildner als 0,5 – 10gew.-%ige, wäßrige Lösungen eingesetzt.

Falls gewünscht, kann man die Emulsionspolymerisation in Gegenwart sogenannter Molekulargewichtsregler, etwa 0,1 – 1,0 Gew.-%, bezogen auf Monomere, wie beispielsweise Alkylmercaptanen, durchführen. Die Polymerisation wird vorzugsweise bei pH-Werten von 3 – 9, insbesondere 4 – 8 durchgeführt.

Eine bevorzugte Ausführungsform des erfindungsgemäßen Polymerisationsverfahrens besteht darin, daß man eine Mischung, bestehend aus Wasser, gegebenenfalls Säuren oder Laugen, Komplexbildnern für Schwermetallionen wie Nitriloessigsäure, Alkylmercaptan und einer Teilmenge der Monomeren und der Hauptmenge an Emulgator auf eine gewünschte Reaktionstemperatur bringt und in diese Vorlage nach Initiierung mit einem der üblichen Initiatoren, Gemische aus Monomeren und Mercaptan einerseits und Wasser und Emulgator andererseits zudosiert. Dabei werden die Gewichtsmengen an Monomergemisch im Polymerisationsansatz derart gewählt, daß nach beendeter Polymerisation Polymerdispersionen mit einem gewichtsmäßigen Polymergehalt von 30 bis 45% erhalten werden. Als günstig erweist es sich, 4 bis 20 Gew.-% des Gesamtmonomerengemisches zur Polymerisation vorzulegen.

Nach dem Verfahren der Erfindung erhält man Dispersionen von Acrylnitrilcopolymerisaten, die durchschnittliche Teilchendurchmesser von ≤90 nm besitzen und einen außerordentlich geringen Restgehalt an monomerem Acrylnitril aufweisen. Im Falle der Dispersionen von Acrylnitril-Styrol/Copolymerisaten liegt der Restgehalt an monomerem Acrylnitril unter 100 ppm und im Falle der Acrylnitril-α-Methylstyroldispersionen unter 500 ppm. Wie aus den Vergleichsbeispielen ersichtlich sind die Restgehalte an Acrylnitril unter Verwendung anderer üblicher Emulgatoren bei gleicher Verfahrensweise wesentlich höher.

Die nach dem Verfahren der Erfindung hergestellten Acrylnitril-Copolymerisatdispersionen können nach üblichen Verfahren koaguliert und die erhaltenen Copolymerisate, gegebenenfalls nach Abmischung mit geeigneten Kautschuken und gepfropften Kautschuken zu hochschlagfesten Kunststoff-Formkörpern verarbeitet werden.

Die nachfolgenden experimentellen Ergebnisse verdeutlichen den Effekt der Verringerung des Rest-Acrylnitril-Gehaltes durch die erfindungsgemäßen Maßnahmen und den erfindungsgemäßen Einsatz der speziellen Emulgatoren I.

Dabei wurde die Latexteilchengröße durch Lichtstreuung ermittelt (vgl. M. Hoffmann, H. Krömer und R. Kuhn: Polymeranalytik II, Georg Thieme Verlag, Stuttgart, 1977, S. 267 bis 268); die Restgehalte an Acrylnitril wurden durch quantitative Gaschromatographie in Carbowachs 20 M-Säuren(R) (Handelsbezeichnung der Firma Merck) und PND-Detektoren bestimmt (PND = Phosphor-Stickstoff-Detektor).

## Beispiel 1

Zur Polymerisation vorgelegt werden

| | |
|---|---|
| 85,3 Gew.-Teile | Wasser |
| 2,0 Gew.-Teile | Emulgator gemäß 1.1.1 |
| x Gew.-Teile | In-Natronlauge |
| 1,8 Gew.-Teile | Acrylnitril. |
| 4,8 Gew.-Teile | Styrol |
| 0,0002 Gew.-Teile | tert.-Dodecylmercaptan. |

Bei einer Reaktionstemperatur von 63 bis 65° C startet man die Polymerisation mit einer Lösung von

| | |
|---|---|
| 16 Gew.-Teilen | Wasser |
| 0,32 Gew.-Teilen | Kaliumpersulfat. |

Innerhalb von 4 Stunden werden anschließend gleichzeitig aber getrennt folgende Lösungen gleichmäßig zudosiert:

Lösung 1)

| | |
|---|---|
| 72,0 Gew.-Teile | Styrol |
| 28 Gew.-Teile | Acrylnitril |
| 0,27 Gew.-Teile | tert.-Dodecylmercaptan. |

Lösung 2)

| | |
|---|---|
| 26,7 Gew.-Teile | Wasser |
| Y Gew.-Teile | ln-Natronlauge |
| 0,56 Gew.-Teile | Emulgator gemäß 1.1.1. |

Anschließend rührt man 4 Stunden bei 63 bis 65°C nach; man erhält Polymerdispersionen, deren Eigenschaften folgende Übersicht wiedergibt:

1.1.)

| Emulgator | Gew.-Teile x | ln-Natronlauge y | Latexteilchen-größe (nm) | Restgehalt an Acrylnitril (ppm) |
|---|---|---|---|---|
| A | 2,07 | 1,54 | 89 | 2291 |
| B | 2,07 | 1,54 | 83 | 50 |
| C | 0 | 0 | 85 | 380 |
| D | 0 | 0 | 81 | 68 |
| E | 0 | 0 | 90 | 94 |

1.1.1.) Eingesetzte Emulgatoren: (Vergleich)

A = Na-Salz der disproportionierten Abietiensäure
C = sekundäres Na-Sulfonat von $C_{14}$-$C_{18}$-Kohlenwasserstoffgemischen

Eingesetzte Emulgatoren der Formel I: gemäß Erfindung

| | $R^1$ | n | m |
|---|---|---|---|
| B = | $C_{12}H_{24}$ | 0 | 7 |
| D = | i-$C_9H_{19}$ | 0 | 6 |
| E = | i-$C_9H_{19}$ | 1 | 6 |

## Beispiel 2

Zur Polymerisation vorgelegt werden

| | |
|---|---|
| 141 Gew.-Teile | Wasser |
| 2,8 Gew.-Teile | Emulgator gemäß 2.1 |
| 0,06 Gew.-Teile | äthylendiamintetraessigsaures Natrium |
| 5,5 Gew.-Teile | Acrylnitril |
| 12,2 Gew.-Teile | α-Methylstyrol |
| 0,08 Gew.-Teile | tert.-Dodecylmercaptan |

Bei einer Reaktionstemperatur von 70° C startet man die Polymerisation mit einer Lösung von

| | |
|---|---|
| 15,6 Gew.-Teilen | Wasser |
| 0,35 Gew.-Teilen | Kaliumpersulfat. |

Innerhalb von 4 Stunden werden anschließend gleichzeitig aber getrennt folgende Lösungen gleichmäßig zudosiert

Lösung 1)

| | |
|---|---|
| 69 Gew.-Teile | α-Methylstyrol |
| 31 Gew.-Teile | Acrylnitril |
| 0,54 Gew.-Teile | tert.-Dodecylmercaptan |

Lösung 2)

| | |
|---|---|
| 29 Gew.-Teile | Wasser |
| 0,67 Gew.-Teile | Emulgator gemäß 2.1 |

Anschließend rührt man 4 Stunden bei 70°C nach; man erhält Polymerdispersionen, deren Rest-Acrylnitril-Gehalt folgende Übersicht wiedergibt:

| 2.1.) | Emulgator*) | Latexteilchengröße (nm) | Restgehalt an Acrylnitril (ppm) |
|---|---|---|---|
| | C | 55 | 2045 |
| | B | 72 | 410 |
| | D | 85 | 310 |

*) Zur Erklärung der Emulgatoren siehe 1.1.1.).

Wie also aus den vorhergegangenen Beispielen ersichtlich ist, findet man überraschenderweise bei Verwendung der Emulgatoren der Formel I im Vergleich zu anderen in der Polymerisationstechnik gebräuchlichen Emulgatoren (wie beispielsweise A und C in 1.1.1.) wesentlich niedrigere Restgehalte an Acrylnitril in der Polymerdispersion nach abgelaufener Emulsionspolymerisation von Acrylnitril mit beispielsweise Vinylaromaten.

## Beispiel 3

Zur Polymerisation vorgelegt werden

| | |
|---|---|
| 90 Gew.-Teile | Wasser |
| 2,5 Gew.-Teile | Emulgator gemäß 3.1 |
| 1,8 Gew.-Teile | Acrylnitril |
| 4,8 Gew.-Teile | Styrol |
| 0,6 Gew.-Teile | Methacrylsäuremethylester |
| 0,00025 Gew.-Teile | tert.-Dodecylmercaptan |

Bei einer Reaktionstemperatur von 63–65° C startet man die Polymerisation mit einer Lösung von

| | |
|---|---|
| 15 Gew.-Teilen | Wasser |
| 0,3 Gew.-Teilen | Kaliumpersulfat |

Innerhalb von 4,5 Stunden werden anschließend folgende Lösungen gleichmäßig zudosiert:

Lösung 1)

| | |
|---|---|
| 9 Gew.-Teile | Methacrylsäuremethylester |
| 65 Gew.-Teile | Styrol |
| 26 Gew.-Teile | Acrylnitril |
| 0,2 Gew.-Teile | n-Butylmercaptan |

Lösung 2)

| | |
|---|---|
| 26 Gew.-Teile | Wasser |
| 0,3 Gew.-Teile | Emulgator gemäß 3.1. |

Anschließend rührt man 4 Stunden bei 63–65°C nach; man erhält Polymerdispersionen, deren Eigenschaften folgende Übersicht wiedergibt:

| 3.1.) | Emulgator*) | Latexteilchengröße (nm) | Restgehalt an Acrylnitril (ppm) |
|---|---|---|---|
| | C | 65 | 3010 |
| | B | 60 | 480 |
| | D | 67 | 385 |

*) Zur Erklärung der Emulgatoren siehe 1.1.1).

**Patentansprüche**

1. Verfahren zur Herstellung von 30—45gew.-%igen wäßrigen Acrylnitrilcopolymerisatdispersionen mit einem durchschnittlichen Teilchendurchmesser von ≤90 nm, ermittelt durch Lichtstreuung, und einem Restmonomergehalt an Acrylnitril von ≤500 ppm durch Emulsionspolymerisation von 5—50 Gew.-Teilen Acrylnitril und 50—95 Gew.-Teilen mindestens eines weiteren Vinylmonomeren — die Summe der Gew.-Teile ist 100 — bei Temperaturen von 40 bis 80° C in Gegenwart mindestens eines wasserlöslichen Radikalbildners bzw. Redoxsystems, in Gegenwart mindestens eines anionischen Emulgators und gegebenenfalls üblicher Hilfsmittel bis zum praktisch vollständigen Umsatz der Monomeren, dadurch gekennzeichnet, daß — bezogen auf 100 Gew.-Teile Monomere — insgesamt 1 bis 4 Gew.-Teile mindestens eines anionischen Emulgators der Formel (I)

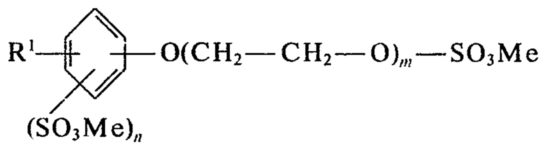

(I)

worin

R¹ einen gesättigten oder geradkettigen Alkylrest mit 5 bis 12 C-Atomen,
n gleich 0 oder 1 und
m gleich 2 bis 12 und
Me Alkalimetall oder Ammonium bedeuten,

eingesetzt werden, wobei 60—95 Gew.-% der Emulgatormenge und 4—20 Gew.-% der Gesamtmonomeren in der Hauptmenge Wasser vorgelegt werden, die Polymerisation mit einer wäßrigen Lösung des Radikalbildners oder des Redox-Systems gestartet wird und 5—40 Gew.-% der Emulgatormenge in der Restmenge Wasser und die Restmenge der Monomeren zudosiert werden.

2. Verfahren nach Anspruch 1, dadurch gekennzeichnet, daß als Vinylmonomere Styrol, α-Methylstyrol, Methylmethacrylat oder n-Butylacrylat oder deren Mischungen eingesetzt werden.

**Claims**

1. A process for the production of 30 to 45% by weight aqueous acrylonitrile copolymer dispersions having an average particle diameter of ≤90 nm, as determined by the light scattering method, and a residual monomer content of acrylonitrile of ≤500 ppm by the emulsion polymerisation of from 5 to 50 parts by weight of acrylonitrile and from 50 to 95 parts by weight of at least one other vinyl monomer — the sum of the parts by weight is 100 — at temperatures of from 40 to 80° C in the presence of at least one water-soluble radical former or redox system and in the presence of at least one anionic emulsifier and, optionally, the usual auxiliaries, up to a substantially complete conversion of the monomers, characterised in that at least one anionic emulsifier of the formula (I):

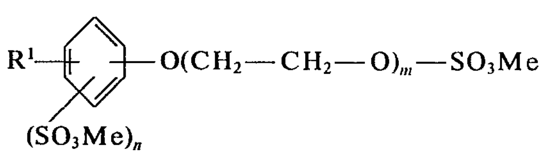

(I)

in which

R¹ represents a saturated or straight-chain alkyl radical containing from 5 to 12 carbon atoms,
n =0 or 1, and
m =2 to 12, and
Me represents an alkali metal or ammonium,

is used in a total quantity of from 1 to 4 parts by weight — based on 100 parts by weight of monomer from 60 to 95% by weight of the quantity of emulsifier and from 4 to 20% by weight of the total quantity of monomers being initially introduced in most of the water, polymerisation being initiated with an aqueous solution of the radical former or the redox system, and from 5 to 40% by weight of the quantity of emulsifier in the rest of the water and the balance of the monomers subsequently being added.

2. A process according to Claim 1, characterised in that the vinyl monomer used is styrene, α-methyl styrene, methyl methacrylate or n-butyl acrylate or mixtures thereof.

**Revendications**

1. Procédé de fabrication de dispersions aqueuses à 30—45% en poids de copolymères d'acrylonitrile ayant un diamètre moyen de particule égal ou inférieur à 90 nm, déterminé par diffraction de la lumière, et avec une teneur en monomère résiduel d'acrylonitrile inférieure ou égale à 500 ppm, par polymérisation en émulsion de 5—50 parties en poids d'acrylonitrile et de 50—95 parties en poids d'au moins un autre monomère vinylique — la somme des parties en poids est 100 — à des températures de 40 à 80° C en présence d'au moins un formateur de radicaux soluble dans l'eau ou d'un système redox, en présence d'au moins un émulsifiant anionique et éventuellement d'auxiliaires usuels, jusqu'à conversion pratiquement complète des monomères, caractérisé en ce que — pour 100 parties en poids de monomères — on utilise en tout 1 à 4 parties en poids d'au moins un émulsifiant anionique de formule (I)

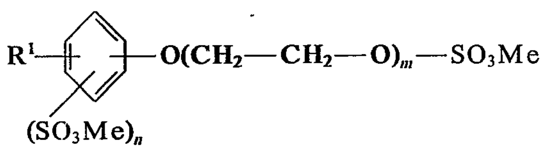

(I)

dans laquelle

$R^1$ représente un radical alcoyle saturé à chaîne droite ou ramifiée ayant 5 à 12 atomes de carbone,
n est égal à 0 ou 1 et
m est égal à 2 à 12 et
Me représente un métal alcalin ou ammonium,

ici 60—95% en poids de la quantité d'émulsifiant et 4—20% en poids des monomères totaux étant introduits d'avance dans la quantité principale d'eau, la polymérisation étant initiée avec une solution aqueuse du formateur de radicaux ou du système redox et 5—40% en poids de la quantité d'émulsifiant dans la quantité restante d'eau et la quantité restante des monomères étant a joutées.

2. Procédé selon la revendication 1, caractérisé en ce qu'en tant que monomères vinyliques on utilise du styrène, de l'α-méthylstyrène, du méthacrylate de méthyle ou de l'acrylate de n-butyle ou leurs mélanges.